# EUROPEAN PATENT APPLICATION

(11) **EP 3 560 390 A1**
(43) Date of publication of application: **30.10.2019**
(21) Application number: 17884019.5
(22) Date of filing: 18.12.2017
(51) Int. Cl.: A47C 27/14, A47C 7/40, B60N 2/64, B60N 2/90

(54) **SEAT PAD**

(30) Priority: 22.12.2016 JP 2016249497
(71) Applicant: Bridgestone Corporation, Tokyo 104-8340 (JP)
(72) Inventor: SHINOHARA, Toshimitsu, Tokyo 104-8340 (JP); KUMAGAI, Kenji, Tokyo 104-8340 (JP)
(74) Representative: Oxley, Robin John George
(86) International application number: PCT/JP2017/045289
(87) International publication number: WO 2018/117017

(57) **Abstract**

The present invention is a seat pad (1) including a backrest (12) that stands up from a rear side of a seat (11) on which an occupant sits and supports the occupant from behind, in which the hardness of a lower part (13) of the backrest (12) in a front-rear direction X that supports at least the waist of the occupant is lower than the hardness of an upper part (14) thereof in the front-rear direction X that supports at least the shoulders of the occupant.

## Description

### [Technical Field]

The present invention relates to a seat pad.

Priority is claimed on Japanese Patent Application No. 2016-249497, filed December 22, 2016, the content of which is incorporated herein by reference.

### [Background Art]

For a seat pad of this type, for example, a configuration with a seat on which an occupant sits and a backrest that stands up from the rear side of the seat to support the occupant from behind as disclosed in WO 2005-122834 is known.

### [Citation List]

### [Patent Document]

[Patent Document 1]
WO 2005-122834

### [Summary of Invention]

### [Technical Problem]

However, with respect to the conventional seat pad, when a centrifugal force (centrifugal acceleration G) acts on the car body while a car is traveling on a curved road, changes lane, or the like, for example, there is a possibility of the upper body of an occupant wobbling or shaking. In this case, in a case in which the occupant is the driver, for example, the line of sight of the driver is likely to be shifted and steering stability is likely to deteriorate.

The present invention takes the above circumstances into consideration, and aims to provide a seat pad that can mitigate wobbling or shaking of the upper body of an occupant even if a centrifugal force acts on the car body.

### [Solution to Problem]

A seat pad according to the present invention is a seat pad including a backrest that stands up from a rear side of a seat on which an occupant sits and supports the occupant from behind, in which the hardness of a lower part of the backrest in a front-rear direction that supports at least the waist of the occupant is lower than the hardness of an upper part thereof in the front-rear direction that supports at least the shoulders of the occupant.

### [Effects of Invention]

According to a seat pad of the present invention, wobbling or shaking of the upper body of an occupant can be mitigated even if a centrifugal force acts on a car body.

### [Brief Description of Drawings]

Fig. 1 is a front view of a seat pad according to an embodiment of the present invention taken from a side in front.
Fig. 2 is a perspective view of the seat pad according to the embodiment of the present invention taken obliquely from a side in front thereof.
Fig. 3 is an enlarged cross-sectional view of a part of a backrest of the seat pad according to the embodiment of the present invention.
Fig. 4 is an explanatory diagram of an aspect ratio of a foam cell.
Fig. 5A is a main cross-sectional view of the backrest of the seat pad showing an enlarged view of a front end part thereof on a seating surface side.
Fig. 5B is a main cross-sectional view of the backrest of the seat pad showing an enlarged view of a center part.
Fig. 5C is a main cross-sectional view of the backrest of the seat pad showing an enlarged view of a rear end part on a back side.
Fig. 6 is a vertical cross-sectional view of a mold for manufacturing a seat pad.
Fig. 7 is a graph showing the relationship between the front-rear direction position of the backrest of the seat pad and aspect ratios.
Fig. 8 is a graph showing the relationship between the front-rear direction position of the backrest of the seat pad and hardness ratios.

### [Description of Embodiments]

Embodiments of a seat pad according to the present invention will be described below with reference to the drawings.

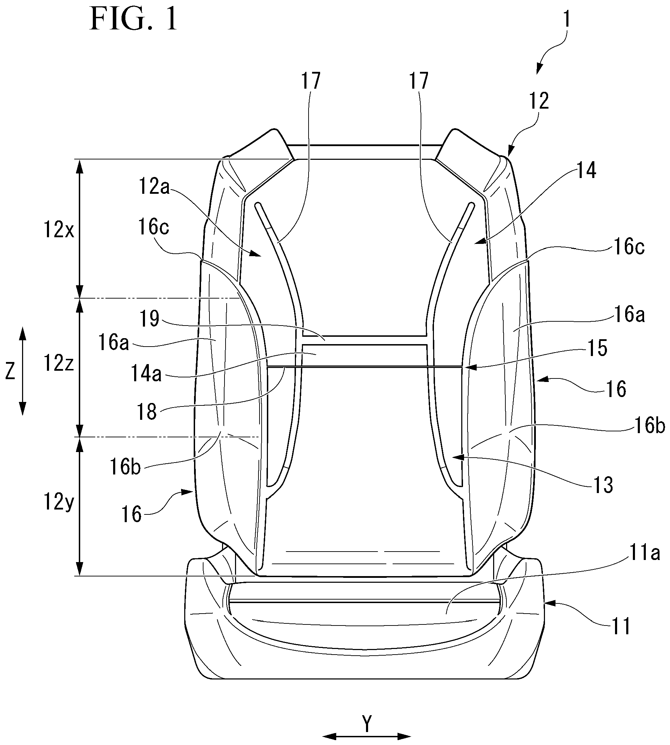

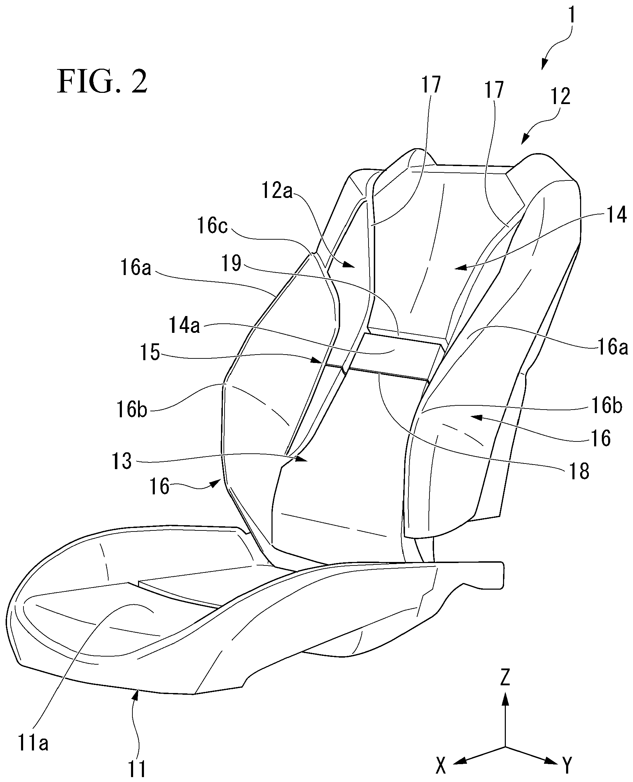

A seat pad 1 of the present embodiment is employed in, for example, seats (seating sections) installed in automobiles (vehicles), and the like, and includes a seat 11 on which an occupant sits, and a backrest 12 that stands up from the rear side of the seat 11 to support the occupant from behind as illustrated in Fig. 1 and Fig. 2. The seat 11 and the backrest 12 are flexible polyurethane foam molded articles obtained by foaming a foaming stock solution and molding it. The foaming stock solution contains, for example, a polyol component, a polyisocyanate component, a crosslinking agent, a foaming agent, and a catalyst.

Further, a configuration only having the backrest 12 without the seat 11 may also be employed as the seat pad 1.

The seat 11 and the backrest 12 have seating surfaces 11a and 12a that support an occupant, respectively. The seating surface 11a of the seat 11 faces upward, and the seating surface 11a of the backrest 12 faces forward.

In addition, in the backrest 12 of the present embodiment, the hardness of a lower part 13 in the front-rear direction X which supports at least the waist of an occupant is set to be lower than the hardness of an upper part 14 in the front-rear direction X which supports at least the shoulders of the occupant. The waist is positioned in a lower region (the lowermost region when the backrest is divided into three equal regions in the vertical direction).

That is, the hardness of the entire region of the lower part 13 in the front-rear direction X is set to be lower than the hardness of the entire region of the upper part 14 in the front-rear direction X. The hardness can be measured according to a D method prescribed in Japanese Industrial Standards JIS S 6400 (2004). The hardness of the upper part 14 in the front-rear direction X is 1.5 times or more the hardness of the lower part 13 in the front-rear direction X. In addition, the hardness of the upper part 14 in the front-rear direction X is set to 0.4 kPa or greater and 0.9 kPa or smaller. The hardness of the lower part 13 in the front-rear direction X is set to 0.2 kPa or greater and 0.4 kPa or smaller. Further, a numerical value of the hardness may be appropriately changed.

Each of the lower part 13 and the upper part 14 is separately formed of one kind of material that is different from the other. Further, the backrest 12 including the lower part 13 and the upper part 14 may be formed by foaming and molding one kind of foaming stock solution for the entirety in one body.

The upper part 14 and the lower part 13 are connected in the vertical direction Z. A boundary 15 between the upper part 14 and the lower part 13 is positioned in a central region 12z when the backrest 12 is divided into three equal regions including an upper region 12x, a lower region 12y, and the central region 12z positioned between the regions 12x and 12y.

It is desirable to set the side below the boundary 15 of the backrest 12 in the vertical direction as the lower region and the side above the boundary 15 of the backrest 12 in the vertical direction as the upper region.

It is desirable for the boundary to be positioned at the position at which the central region is divided into two equal parts in the vertical direction or a position lower than the position at which the central region is divided into two equal parts.

In the illustrated example, the boundary 15 is positioned at the center of the central region 12z in the vertical direction Z. Further, the position of the boundary 15 in the vertical direction Z is not limited thereto and may be arbitrarily changed.

Here, an upper end position and a lower end position of the backrest 12 when the backrest 12 is divided into three equal parts in the vertical direction Z are specified by an upper edge and a lower edge of the seating surface 12a of the backrest 12 when the backrest 12 is viewed from the front in a state in which the backrest 12 and the seat 11 are assembled together. Further, a part formed of a material different from those of the lower part 13 and the upper part 14 may be interposed between the lower and upper parts 13 and 14.

Vertical grooves 17 extending in the vertical direction Z are formed separately from each other on both sides of the seating surface 12a of the backrest 12 in the left-right direction Y. The vertical grooves 17 are disposed across the entire region of the seating surface 12a of the backrest 12 in the vertical direction Z except the lower end part. The vertical grooves 17 extend gradually inward in the left-right direction Y as they come to face the inner side from the outer side in the vertical direction Z and form curved shapes projecting inward in the left-right direction Y in a front view in which the seating surface 12a of the backrest 12 is viewed from the front. Inner ends of the vertical grooves 17 in the left-right direction Y are positioned in the central region 12z.

A slit 18 extending in the left-right direction Y is formed on the boundary 15 between the lower part 13 and the upper part 14 in the backrest 12. The slit 18 crosses the vertical grooves 17 in the left-right direction Y and is disposed across the entire seating surface 12a of the backrest 12 in the left-right direction Y.

A horizontal groove 19 connecting the vertical grooves 17 in the left-right direction Y is formed on the seating surface 12a of the backrest 12. The horizontal groove 19 is disposed at a part above the slit 18 in the central region 12z.

Further, a lower part 14a of the upper part 14 positioned between the horizontal groove 19 and the slit 18 is formed to have a shorter length in the vertical direction Z than the part of the upper part above the horizontal groove 19.

The seat pad 1 has a pair of side auxiliary parts 16 projecting forward from both sides of the backrest 12 in the left-right direction Y.

The side auxiliary parts 16 are arranged to be integrated at least in the lower region 12y and the central region 12z on both sides of the backrest 12 in the left-right direction Y. In the illustrated example, the side auxiliary parts 16 are arranged to be integrated across the entire backrest 12 in the vertical direction Z except the upper end part thereof. Front edges 16a of the side auxiliary parts 16 are formed in a curved shape gradually projecting forward as they come to face the inner side from the outer side in the vertical direction Z. Top parts 16b positioned furthest forward on the front edges 16a of the side auxiliary parts 16 are positioned below the centers of the side auxiliary parts 16 in the vertical direction Z.

In addition, the boundary 15 between the lower part 13 and the upper part 14 of the backrest 12 is positioned above the top parts 16b of the side auxiliary parts 16 and below upper edges 16c of the side auxiliary parts 16. The upper edges 16c are regions positioned at upper ends of the edges of the side auxiliary parts 16.

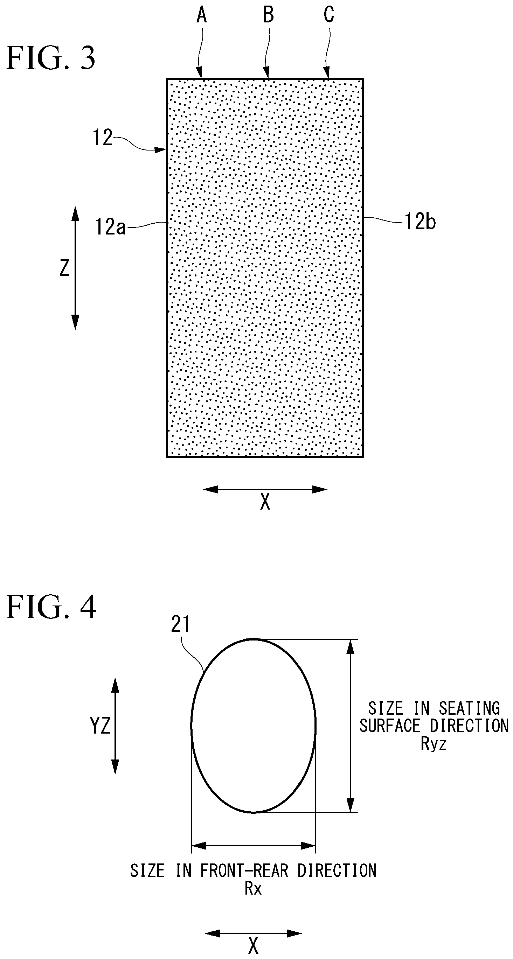

A number of foam cells 21 included in the backrest 12 have a higher ratio of a size Ryz in the direction YZ along the seating surface 12a of the backrest 12 (which will be referred to as a seating surface direction below) to a size Rx in the front-rear direction X, that is, a value obtained by dividing the size Ryz in the seating surface direction YZ by the size Rx in the seating surface direction X (which will be referred to as an aspect ratio) when they are positioned closer to the seating surface 12a side in the front-rear direction X as illustrated in Fig. 3 to Fig. 5C.

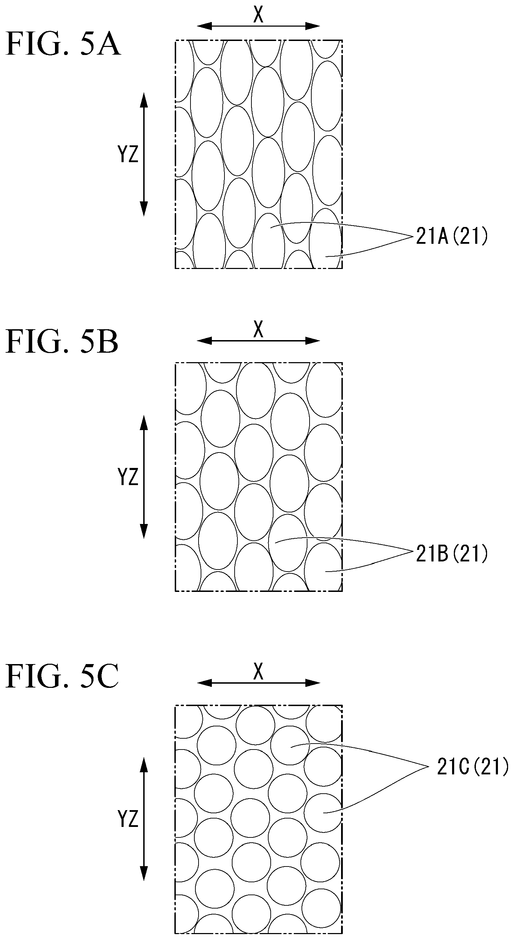

Further, the seating surface direction YZ is orthogonal to the front-rear direction X and includes the left-right direction Y and the vertical direction Z. In addition, although the seating surface direction YZ indicates the vertical direction of the paper in Fig. 4 and Fig. 5 for the sake of convenience in the illustrated example, the seating surface direction YZ is not limited to this direction, and includes, for example, the depth direction of the paper along the seating surface 12a, or the like. That is, for example, foam cells 21 that are long in the left-right direction Y, foaming cells 21 that are long in the vertical direction Z, and the like may be mixed in the backrest 12.

In addition, the seating surface direction YZ may refer to any directions including toward the upper, lower, left, and right sides in the plane of the seating surface direction.

In the backrest 12, a rate of increase of an aspect ratio of the foam cells 21 toward the seating surface 12a in the front-rear direction X is uniform across the backrest 12. Accordingly, a part of the backrest 12 having hardness suddenly changing in the front-rear direction X can be excluded, and thus it is possible to make it difficult for discomfort to be caused when an occupant sits against the backrest. Further, "being uniform" mentioned here may be completely the same, and also includes a difference in an error range in the front-rear direction X.

Each of the lower part 13 and the upper part 14 of the backrest 12 is formed by foaming and molding one kind of foaming stock solution across the front-rear direction X. Instead, the lower part 13 and the upper part 14 may be formed separately by laminating a plurality of thin layers obtained by foaming and molding the foaming stock solution.

In the front end part A on the seating surface 12a side of the backrest 12 illustrated in Fig. 3, the aspect ratio is higher than 1, the size Ryz in the seating surface direction YZ is greater than the size Rx in the front-rear direction X, and foam cells 21A have a flat shape that is long in the seating surface direction YZ as illustrated in Fig. 5A. That is, the foam cells 21A included in the front end part A easily bend in the front-rear direction X and unlikely to deform in the seating surface direction YZ, and thus they are felt to be soft in terms of cushioning properties in the front-rear direction X.

The aspect ratio of the foam cells 21A included in the front end part A of the backrest 12 is preferably set to be in the range of 1.4 to 1.5. Further, the numerical values are the aspect ratios of the foam cells 21A included in the front end part A of the backrest 12 except for cells in which foaming is suppressed formed at a part coming in contact with or adjacent to an inner surface of a cavity C1, which will be described below.

Here, among the parts obtained by equally dividing the backrest into three in the front-rear direction, the front side is referred to as the front end part A, the middle part is referred to as a center part B, and the rear side is referred to as a rear end part C.

The center part B of the backrest 12 in the front-rear direction X as illustrated in Fig. 3 has an aspect ratio that is a value higher than 1 and smaller than the aspect ratio of the front end part A, the size Ryz in the seating surface direction YZ that is slightly greater than the size Rx in the front-rear direction X, and a circular shape that is slightly flattened in the seating surface direction YZ as illustrated in Fig. 5B. That is, foam cells 21B included in the center part B are less likely to bend in the front-rear direction X and are felt to be slightly harder than the foam cells 21A of the front end part A in terms of cushioning properties in the front-rear direction X.

A rear end part C on the back surface 12b side of the backrest 12 that is positioned on the opposite side to the seating surface 12a and faces rearward illustrated in Fig. 3 has an aspect ratio that is substantially close to 1 and has a circular shape of which a size Ryz in the seating surface direction YZ is substantially equal to a size Rx in the front-rear direction X as illustrated in Fig. 5C. Foam cells 21C included in the rear end part C are less likely to deform since they have equal hardness with respect to forces in all directions and are felt to be harder than each of the foam cells 21A and 21B of the front end part A and the center par B.

It is preferable for an aspect ratio of the foam cells 21C included in the rear end part C of the backrest 12 to be set in the range of 0.95 to 1.05. Further, the numerical values are the aspect ratios of the foam cells 21C included in the rear end part C of the backrest 12 except for cells in which foaming is suppressed formed at a part coming in contact with or adjacent to an inner surface of a cavity C1, which will be described below.

The shapes of the foam cells 21 included in the backrest 12 continuously and gradually change from the flat shape that is long in the seating surface direction YZ to the substantially circular shape gradually from the seating surface 12a side to the back surface 12b side in the front-rear direction X. Each of volumes of the foam cells 21A included in the front end part A and the foam cells 21C included in the rear end part C of the backrest 12 is smaller than a volume of the foam cells 21B included in the center part B positioned between the first end part and rear end part. That is, the volumes of the foam cells 21 gradually increase from the front end part A and the rear end part C to the center part B therebetween in the front-rear direction X separately.

In addition, numerical values of the aspect ratio of the above-described foam cells 21 of the backrest 12, a rate of change of the aspect ratio, and the like are set to be equal for the seat 11. Further, without being limited thereto, the forms of the foam cells 21 and the like may differ for each of the backrest 12 and the seat 11.

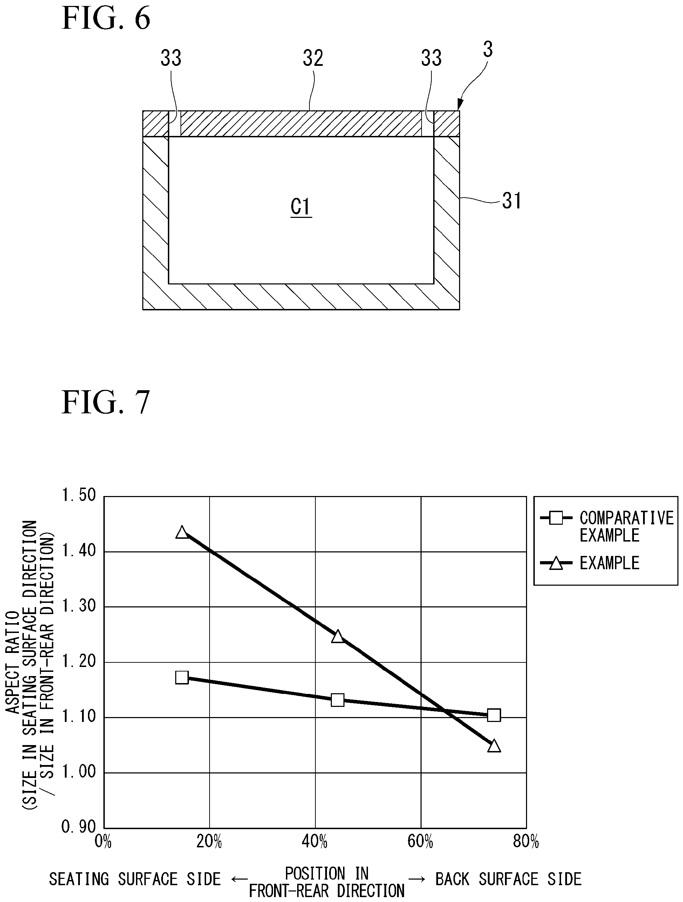

Further, the seat pad 1 configured as described above is formed using, for example, a mold 3 illustrated in Fig. 6.

The mold 3 is formed in a box shape having a lower mold 31 and an upper mold 32, and an inner space thereof is the cavity C1 for forming the seat pad 1. The upper mold 32 is a lid that covers the upper end opening of the lower mold 31 and has air vents 33 vertically penetrating outer circumferences. Further, instead of the air vents 33, fine grooves may be formed on the boundary surface between the lower mold 31 and the upper mold 32. A width of the fine grooves may be, for example, 2 mm to 50 mm, and a depth thereof may be 0.1 mm to 1.0 mm. A wall, which is not illustrated, may be disposed at a part in the cavity C1 at which the slit 18 positioned on the boundary 15 is to be formed.

Here, a flexible polyurethane foam that is a material for forming the seat pad 1 will be described.

A preferred embodiment of a flexible polyurethane foam is a flexible polyurethane foam obtained by foaming and molding a foaming stock solution containing a polyol, a polyisocyanate, a crosslinking agent, a foaming agent, and a catalyst. Characteristics of the materials forming the foaming stock solution are described in the following (A) to (C).

(A) A polyether polyol having a weight-average molecular weight Mw of 3,000 to 12,000 and 3 to 4 functional groups (hydroxyl groups) is included as the polyol component.
(B) A ratio (molar ratio) of ethylene oxide groups to propylene oxide groups in the entire compound included in the foaming stock solution as the crosslinking agent component (overall crosslinking agent) is 100 or higher.
(C) Methylene diphenyl diisocyanate (MDI) is included at an isocyanate index of 70 or higher as the polyisocyanate.

### <Polyol component>

As the polyol component forming the foaming stock solution, a polyether polyol having a weight-average molecular weight Mw of 3,000 to 12,000 and 3 to 4 functional groups (hydroxyl groups) is included. As the polyether polyol, a polyether polyol obtained by ring-opening polymerization of an alkylene oxide is preferred due to a favorable reactivity.

Examples of alkylene oxides include propylene oxide (PO), ethylene oxide (EO), and the like. One kind or two or more kinds of alkylene oxide may be used as a material of a polyether polyol.

As a polyether polyol forming the foaming stock solution, a polyether polyol obtained by using PO and EO in combination is preferred from the viewpoint of activity of raw materials. A mixture ratio (molar ratio) of PO and EO is not particularly limited, and for EO:PO (molar ratio), for example, 8:92 to 25:75 is preferable, and 13:87 to 20:80 is more preferable. If EO:PO (molar ratio) is in the above ranges, a polyether polyol having a favorable reactivity can be easily generated.

The number of hydroxyl groups (functional groups) included in one molecule of the polyether polyol forming the foaming stock solution is preferably 3 to 4. A viscosity of the foaming stock solution becomes moderate and a flexible polyurethane foam having excellent physical properties is obtained in the preferable range. Further, in addition to the polyether polyol described in (A) above, a polyether polyol having two functional groups may be used as an arbitrary component in combination.

A weight-average molecular weight Mw of the polyether polyol forming the foaming stock solution is preferably 3,000 to 12,000, more preferably 3,000 to 8,000, and even more preferably 5,000 to 8,000. If a weight-average molecular weight of the polyether polyol is 12,000 or smaller, a viscosity of the foaming stock solution does not become excessively high, which brings good stirring efficiency. On the other hand, if a weight-average molecular weight of the polyether polyol is 3,000 or greater, a flexible polyurethane foam having excellent resilience is obtained. Here, a weight-average molecular weight Mw is a value calculated as a polystyrene equivalent using gel permeation chromatography (GPC method). Further, in addition to the polyether polyol described in (A) above, a polyether polyol having a weight-average molecular weight exceeding 8,000 to 12,000 or smaller may also be used as an arbitrary component in combination.

A degree of unsaturation of the polyether polyol forming the foaming stock solution is preferably 0.03 milliequivalents/g or lower. If the degree of unsaturation is 0.03 milliequivalents/g or lower, a flexible polyurethane foam having excellent properties such as durability is obtained. Here, a "degree of unsaturation" is based on Japan Industrial Standard JIS K 1557-1970 and means a total degree of unsaturation (milliequivalents/g) measured using a method of titrating acetic acid liberated by the action of mercuric acetate on unsaturated bonds in a sample with potassium hydroxide.

One kind or two or more kinds of polyether polyol may be included in the foaming stock solution as the polyol component.

In a case where one kind of polyether polyol is included in the foaming stock solution as the polyol component, the contained polyether polyol preferably has a weight-average molecular weight of 7,000 or greater and four functional groups (tetrafunctional). If the polyether polyol is used, the above-described sense of shaking given when the flexible polyurethane foam obtained from foaming and molding is used for a seat pad can be significantly reduced.

From the viewpoint of easily imparting desired physical properties to the flexible polyurethane foam obtained by foaming and molding the foaming stock solution, a total content of the one or two or more kinds of polyether polyol corresponding to the polyether polyol described in (A) above with respect to the gross mass of the polyol component contained in the foaming stock solution is preferably 60 mass% or more, more preferably 70 to 100 mass%, even more preferably 80 to 100 mass%, and most preferably 85 to 100 mass%.

A polymer polyol may be used in combination therewith in the polyol component forming the foaming stock solution, in addition to the polyether polyol. A polymer polyol that is generally used for polyurethane foaming moldings is applicable as the polymer polyol. For example, a polymer polyol obtained by graft-copolymerizing a polymer component such as polyacrylonitrile or an acrylonitrile-styrene copolymer with a polyether polyol composed of a polyalkylene oxide having a weight-average molecular weight Mw of 3,000 to 8,000, more preferably 4,000 to 7,000, may be exemplified. As an alkylene oxide that is a raw material of the polyalkylene oxide, an alkylene oxide including propylene oxide (PO) as a functional group (polymerizable group) is preferable, but an alkylene oxide only including propylene oxide or an alkylene oxide including both propylene oxide and ethylene oxide (EO) is more preferable. In addition, a content of the polymer component with respect to the gross mass of the polymer polyol is preferably 25 to 50 mass%.

A mixing ratio of a polyether polyol and a polymer polyol as polyol components forming the foaming stock solution with respect to polyether polyol:polymer polyol (mass ratio) is preferably 70:30 to 99:1, more preferably 80:20 to 99:1, and even more preferably 85:15 to 99:1. A flexible polyurethane foam having desired physical properties can be easily obtained in the above-described ranges.

### <Polyisocyanate component>

Methylene diphenyl diisocyanate is included at the isocyanate index of 70 or higher as a polyisocyanate component forming the foaming stock solution.

Methylene diphenyl diisocyanate (MDI) is a polyisocyanate component generally used in the field of polyurethane foam. Specifically, examples of MDI include 4,4-methylene diphenyl diisocyanate (4,4-MDI), 2,4-methylene diphenyl diisocyanate (2,4-MDI), and 2,2-methylene diphenyl diisocyanate (2,2-MDI) which are generally called monomeric MDI, polymeric MDI, crude MDI, and the like.

The foaming stock solution may contain one kind of MDI alone or two or more kinds of MDI.

In the present specification, the "isocyanate index" refers to a proportion of an actual amount of a polyisocyanate blended in to react with all active hydrogen of a polyol or the like included in the foaming stock solution with respect to a required amount calculated by stoichiometry. In a case where the isocyanate index is 90, for example, this means that an amount of polyisocyanate equivalent to 90% by mass of a stoichiometric requirement for reacting with all the active hydrogen in a polyol or the like included in the foaming stock solution has been blended in.

The isocyanate index derived from MDI included in the foaming stock solution is at least 70 or higher, preferably 70 to 120, and more preferably 80 to 100. If the isocyanate index is 70 or higher, the foaming stock solution can be prevented from having a poor stirring property. If the isocyanate index is 120 or lower, foam can be prevented from collapsing.

A known polyisocyanate component other than MDI may be added in a small amount as an arbitrary component in addition to MDI described in (C) above. Examples thereof include, for example, tolylene diisocyanate (TDI), triphenyl diisocyanate, xylene diisocyanate, polymethylene polyphenylene polyisocyanate, hexamethylene diisocyanate, isophorone diisocyanate, and the like.

From the viewpoint of easily imparting desired physical properties to the flexible polyurethane foam obtained by foaming and molding the foaming stock solution, a total content of the one or two or more kinds of methylene diphenyl diisocyanate described in (C) above with respect to the gross mass of the polyisocyanate component contained in the foaming stock solution is preferably 70 mass% or more, more preferably 80 to 100 mass%, even more preferably 90 to 100 mass%, and most preferably 95 to 100 mass%.

In addition, a content of pure MDI composing methylene diphenyl diisocyanate described in (C) above with respect to the gross mass of the polyisocyanate component contained in the foaming stock solution is preferably 40 mass% or more, more preferably 50 to 90 mass%, even more preferably 55 to 85 mass%, and most preferably 60 to 80 mass%.

### <Crosslinking agent component>

As a crosslinking agent component included in the foaming stock solution to cause the flexible polyurethane foam obtained by foaming and molding the foaming stock solution to have desired physical properties, a crosslinking agent having a higher reactivity with respect to the polyisocyanate component than water is preferably included as a main component. Generally, glycerin, a crosslinking agent having an ethylene oxide group (EO-based crosslinking agent), water, a crosslinking agent having a propylene oxide group (PO-based crosslinking agent) have lower reactivities with the polyisocyanate component in this order. Based on this, a molar ratio of EO groups to PO groups (the number of moles of EO groups/the number of moles of PO groups) included in all of one or two or more compounds contained in the foaming stock solution as a crosslinking agent is preferably 100 or higher, more preferably 105 or higher, and even more preferably 110 or higher. The higher the molar ratio, the better the agent is. In other words, it is desirable for the foaming stock solution substantially not to contain a crosslinking agent having PO groups.

Here, an ethylene oxide group (EO group) refers to a group having a monovalent bonding group from which one hydrogen atom composing an ethylene oxide has been removed. A propylene oxide group (PO group) refers to a group having a monovalent bonding group from which one hydrogen atom composing a propylene oxide has been removed.

A known crosslinking agent used in the field of polyurethane foam is applicable as a specific crosslinking agent. A molecular weight of the crosslinking agent is preferably 1,000 or less in general. From the viewpoint of increasing a molar ratio of EO groups/PO groups, a commercially available crosslinking agent indicated as "EO (groups)/PD (groups)=100/0" is preferable.

One kind or two or more kinds of crosslinking agent may be included in the foaming stock solution. When a crosslinking agent at a ratio of EO groups/PO groups (molar ratio) of 100 or higher is used in combination with glycerin, a mass ratio of corresponding crosslinking agent:glycerin is preferably 10:1 to 1:10, more preferably 5:1 to 1:5, and even more preferably 2:1 to 1:2.

A total content of the crosslinking agent component included in the foaming stock solution with respect to 100 parts by mass of the polyol component is preferably 0.5 to 10 parts by mass, and more preferably 1 to 5 parts by mass. If the content has the upper limit value of the range or lower, the foaming property becomes excessively strong, molding becomes difficult, and collapse of foam can be prevented. If the content has the lower limit value of the range or higher, the effects of the crosslinking agent are sufficiently obtained.

### <Foaming agent component>

Water is preferably used as a foaming agent component composing the foaming stock solution. Since water generates carbon dioxide gas when it reacts with a polyisocyanate, it functions as a foaming agent.

A content of water included in the foaming stock solution with respect to 100 parts by mass of the polyol component is preferably 1 to 7 parts by mass and more preferably 2 to 5 parts by mass. A flexible polyurethane foam having desired physical properties is easily obtained in the ranges. In addition, thermal compression residual strain characteristics of the obtained flexible polyurethane foam can be prevented from deteriorating.

### <Catalyst component>

A known catalyst used in the field of polyurethane foam is exemplified as a catalyst component composing the foaming stock solution. Examples of known catalysts include an amine-based catalyst and a tin catalyst.

Normally, known catalysts are broadly divided into resinification catalysts that promote resinification of polyurethane and foaming catalysts that promote foaming of a polyisocyanate component.

A preferred resinification catalyst is a tertiary amine catalyst that particularly promotes a reaction of polyisocyanate with a polyol, and although not particularly limited, for example, examples thereof include triethylenediamine, 1,8-diazabicyclo[5.4.0]undesesen-7, imidazoles such as 1-methyl imidazole, 1, 2-dimethyl imidazole, and 1-isobutyl-2-methyl imidazole, and 1,1'-(3-(dimethylamino)propyl)imino)bis(2-propanol). In addition, a preferred foaming catalyst is a tertiary amine catalyst that particularly promotes a reaction of an isocyanate with water and effectively generates carbon dioxide gas and is generally used to improve fluidity and dimensional stability of foam. Although a foaming catalyst is not particularly limited, examples thereof include bis(2-dimethylaminoethyl)ether, N, N, N', N", N"-pentamethyldiethylene triamine, and N, N, N', N", N"', N'"-hexamethyltriethylenetetramine.

The foaming stock solution preferably contains at least a resinification catalyst as a catalyst component among a resinification catalyst and a foaming catalyst.

A mass ratio of a resinification catalyst and a foaming catalyst contained in the foaming stock solution is preferably 100:0 to 100:100, more preferably 100:0 to 100:50, and even more preferably 100:0 to 100:20.

A content of 1,1'-(3-(dimethylamino)propyl)imino)bis(2-propanol) serving as the resinification catalyst with respect to 100 parts by mass of the polyol component is preferably 0.1 to 2.0 parts by mass, more preferably 0.2 to 1.5 parts by mass, and even more preferably 0.3 to 1.2 parts by mass, and particularly preferably 0.4 to 0.9 parts by mass. A flexible polyurethane foam having desired physical properties is easily obtained in the range.

When 1,1'-(3-(dimethylamino)propyl)imino)bis(2-propanol) serving as the resinification catalyst is used with the foaming catalyst in combination, a total content of the two catalysts with respect to 100 parts by mass of the polyol component is preferably 0.1 to 1.5 parts by mass, more preferably 0.4 to 1.2 parts by mass, and even more preferably 0.7 to 1.0 parts by mass. A flexible polyurethane foam having desired physical properties is easily obtained in the ranges.

A resinification catalyst having a ratio of a foaming catalyst constant with respect to a gelation catalyst constant of 10×10⁻¹ or less is preferably used as the amine-based catalyst to promote a resinification (gelation) reaction of polyols with polyisocyanates and promote urethane bond formation.

Here, the gelation catalyst constant is a constant for determining a speed of the resinification reaction of polyols with polyisocyanates, and as the value increases, a cross link density of foam becomes higher and mechanical properties of the foam become favorable. Specifically, a reaction constant of a gelation reaction of tolylene diisocyanate with diethylene glycol is used. Meanwhile, a foaming catalyst constant is a constant for determining a speed of a foaming reaction of polyisocyanates with water, and as the value increases, a cell communicating property of the foam is improved further. Specifically, a reaction constant of a foaming reaction of tolylene diisocyanate with water is used. A ratio of the two catalyst constants expresses balance of the catalysts.

Examples of preferred amine-based catalyst are shown below including specific examples of the resinification catalyst.

Specific examples of the resinification catalyst include triethylenediamine (TEDA), a mixture of triethylenediamine and polypropylene glycol, N,N,N',N'-tetramethylethylenediamine, N,N,N',N'-tetramethylpropylenediamine, N,N,N',N",N"-pentamethyl-(3-aminopropyl)ethylene diamine, N,N,N',N",N"-pentamethyl dipropylene triamine, N,N,N',N'-tetramethyl guanidine, tertiary amines such as 135-tris(N,N-dimethylaminopropyl)hexahydro-S-triazine, imidazoles such as 1-methyl imidazole, 1,2-dimethyl imidazole, and 1-isobuthyl-2-methyl imidazole, N,N,N',N'-tetramethyl hexamethylene diamine, N-methyl-N'-(2-dimethylaminoethyl)piperazine, N,N'-dimethylpiperazine, N-methylpiperazine, N-methyl morpholine, N-ethyl morpholine , and the like in addition to the above-described catalysts.

A content of the amine-based catalyst in the foaming stock solution with respect to 100 parts by mass of the polyol component is preferably 0.1 to 0.4 parts by mass, more preferably 0.2 to 0.4 parts by mass, and even more preferably 0.3 to 0.4 parts by mass. If a lower limit value of the range is 0.1 parts by mass or higher, a collapse of foam can be prevented. If an upper limit value of the range is 0.4 parts by mass or less, it is possible to prevent closed foam cells from being generated and shrinking.

Examples of the tin catalyst include known organic tin such as stannous octoate, stannous laurate, dibutyltin dilaurate, dibutyltin dimaleate, dibutyltin diacetate, dioctyltin diacetate, and tin octylate.

A content of the tin catalyst in the foaming stock solution with respect to 100 parts by mass of the polyol component is preferably 0.01 to 0.5 parts by mass, more preferably 0.01 to 0.4 parts by mass, and even more preferably 0.01 to 0.2 parts by mass.

### <Foam stabilizer component>

The foaming stock solution may include a foam stabilizer. A known foam stabilizer used in the field of polyurethane foam is applicable as a foam stabilizer, and for example, a silicon-based foam stabilizer, an anionic foam stabilizer, or a cationic foam stabilizer may be exemplified. Such foam stabilizers include foam stabilizers having a hydroxyl group at the end of the molecular chain.

A content of the foam stabilizer in the foaming stock solution with respect to 100 parts by mass of the polyol component is preferably 0.1 to 5 parts by mass, more preferably 0.2 to 3 parts by mass, and even more preferably 0.3 to 0.8 parts by mass. Generally, effects of a foam stabilizer are sufficiently obtained at a content of 5 parts by mass or less. In addition, if a content thereof is 0.1 parts by mass or more, an agitation property of the polyol component and the polyisocyanate component is improved, and a flexible polyurethane foam having desired physical properties is easily obtained.

### <Other arbitrary components>

The foaming stock solution can be blended with various additives if necessary. For example, a colorant such as pigment, a chain extender, a filler such as calcium carbonate, a flame retardant, an antioxidant, a UV absorber, a light stabilizer, a conductive material such as carbon black, an antimicrobial agent, or the like can be blended. Amounts of various additives to be blended in may be appropriately adjusted according to applications or purposes.

### < Preparation method for foaming stock solution>

An example of a preparation method of the foaming stock solution is not particularly limited and includes, for example, a preparation method for obtaining a foaming stock solution by preparing a mixture including the components other than a polyisocyanate component (which will also be referred to as a "polyol mixture" below) and then mixing a polyisocyanate component with them.

The preparation of the polyol mixture is preferably performed by first mixing a catalyst component with the polyol component, then mixing a foam stabilizer component, a crosslinking agent component, and an arbitrary component if necessary with them, and finally mixing water which serves as a foaming agent with them in order to reduce contact of water which serves as a foaming agent with the catalyst component.

Then, in the process of foaming and molding a flexible polyurethane foam, the foaming stock solution is preferably prepared by mixing the polyol mixture with a polyisocyanate component.

A viscosity of the prepared polyol mixture at a liquid temperature of 25°C is preferably 2,400 mPa·s or lower, and more preferably 1,800 mPa·s or lower. Agitation efficiency of the foaming stock solution becomes favorable in the preferred viscosity range, a sufficient amount of foam is obtained uniformly in the whole foaming stock solution, and a flexible polyurethane foam having desired physical properties (foam molding) is easily obtained.

A method of foaming and molding a flexible polyurethane foam using the foaming stock solution is not particularly limited, and for example, a known method of injecting a foaming stock solution into a cavity formed in a mold and foaming and molding foam is applicable.

In order to prevent the components included in the foaming stock solution from being separated in the known method, preparing the foaming stock solution by mixing the above-described components immediately before the foaming stock solution is injected into the cavity is preferable. A liquid temperature of the foaming stock solution to be injected is preferably 10 to 50°C, more preferably 20 to 40°C, and even more preferably 25 to 35°C. A temperature of the mold is preferably 40 to 80°C, more preferably 50 to 70°C, and even more preferably 60 to 65°C. If a liquid temperature of the foaming stock solution and a temperature of the mold are in the above-described preferable ranges, proper foaming can be obtained. Next to the foaming, the solution is cured in the mold and then demolded, and thereby a target flexible polyurethane foam is obtained. Here, a known film removal treatment may be further performed on the obtained flexible polyurethane foam.

### <Regarding hardness distribution of flexible polyurethane foam>

Regardless of foaming and molding methods, the flexible polyurethane foam according to the present embodiment tends to have gradually increasing hardness from a lower side to an upper side in the vertical direction at the time of foaming and molding. That is, when the flexible polyurethane foam according to the present embodiment is applied to the backrest 12, the hardness distribution thereof in the front-rear direction X tends to continuously increase or decrease.

Further, although the flexible polyurethane foam tends to have increasing hardness distribution when viewed from the lower side to the upper side in the vertical direction at the time of foaming and molding, the flexible polyurethane foam likewise tends to have decreasing hardness distribution when viewed from the upper side to the lower side in the vertical direction at the time of foaming and molding.

Although details of the mechanism of the flexible polyurethane foam according to the present embodiment showing the above-described hardness distribution are unknown, the combination of the components included in the foaming stock solution is considered to be a cause. Particularly, that a main polymerizable group (reactive group) of the crosslinking agent component is an EO group, that a PO group that does not exhibit a substantial crosslinking effect is not included in the crosslinking agent component, and that MDI is included in the polyisocyanate component most and a little or no TDI is included therein are considered to be main causes. In addition, that glycerin is contained as a crosslinking agent component and that a resinification catalyst is contained as a catalyst component are also considered to contribute greatly to the above-described hardness distribution.

In addition, when the flexible polyurethane foam showing the above-described hardness distribution is cut in the vertical direction at the time of foaming and molding, the degree of flatness of the shape of foam cells on the cross-section, that is, the above-described aspect ratio tends to gradually increase from the upper end part toward the lower end part at the time of foaming and molding.

There are tendencies for foam cells of the flexible polyurethane foam obtained from foaming and molding located at the lower end part at the time of foaming and molding to show a horizontally long flat shape (elliptical shape) when being crushed in the gravity direction, the degree of flatness of the foam cells located at the middle part to be relatively decreased and have a shape close to a circle, and the degree of flatness of the foam cells located at the upper end part to be more decreased and have a shape that is closer to a circle. As described above, the change in the shapes of the foam cells 21 shown on the cross-section of the flexible polyurethane foam in the vertical direction at the time of foaming and molding is considered to be correlated with the above-described tendencies of hardness distribution.

Further, "flexibility" of the flexible polyurethane foam according to the present embodiment means hardness (rigidity) to the extent that the flexible polyurethane foam is deformed and dented when it is pressed with a hand or a person sits thereon.

In addition, a flexible polyurethane foam obtained by foaming and molding a foaming stock solution containing a polyol, a polyisocyanate, a crosslinking agent, a foaming agent, and a catalyst in which a polyether polyol having a weight-average molecular weight Mw of 3,000 to 12,000 and three to four functional groups is contained as the polyol, a ratio of ethylene oxide groups/propylene oxide groups (molar ratio) in the entire compound included as the crosslinking agent component is 100 or higher, a short-chain polyol having a weight-average molecular weight of 1,000 or less is contained as the crosslinking agent, and tolylene diisocyanate is contained at an isocyanate index of 70 or higher as the polyisocyanate can be used as another flexible polyurethane foam.

As described above, since the hardness of the lower part 13 of the backrest 12 is lower than the hardness of the upper part 14 of the seat pad 1 according to the present embodiment, the position of the waist of an occupant with respect to the seat pad 1 can be stabilized by causing the waist of the occupant to sink deeply into the backrest 12, and wobbling or shaking of the upper body of the occupant can be mitigated even when a centrifugal force acts on the car body together with the upper part 14 having high hardness supporting the shoulders of the occupant. Accordingly, in a case in which the occupant is the driver, for example, the line of sight of the driver can be prevented from straying during driving and thus steering stability can be enhanced.

In addition, since the boundary 15 between the upper part 14 and the lower part 13 is positioned in the central region 12z of the backrest 12, wobbling or shaking of the upper body of the occupant can be reliably mitigated.

In addition, since the boundary 15 between the upper part 14 and the lower part 13 is positioned above the top parts 16b of the side auxiliary parts 16 and below the upper edges 16c of the side auxiliary parts 16, a part of the occupant at least including the waist that is caused to sink deeply into the backrest 12 can be supported not only by the backrest 12 but also by the side auxiliary parts 16 in the left-right direction Y, and thus wobbling or shaking of the upper body of the occupant can be more reliably mitigated.

In addition, the shapes of many foam cells 21 included in the backrest 12 are long in the seating surface direction YZ as the foam cells are positioned on the seating surface 12a side in the front-rear direction X, and while the foam cells 21 that are easily compressed and deformed in the front-rear direction X are positioned on the seating surface 12a side, the foam cells 21 that are not easily compressed and deformed in the front-rear direction X are positioned on the back surface 12b side opposite to the seating surface 12a in the front-rear direction X.

Therefore, the hardness of the seating surface 12a side can be lower than the hardness of the back surface 12b side, thus it is possible to make it difficult for the occupant to feel hardness during sitting, and thus the occupant can maintain a good feeling while seated.

Moreover, by gradually increasing the percentage of hardness in the front-rear direction X, it is possible to prevent a portion of the part of the backrest 12 located between the seating surface 12a side and the back surface 12b side from suddenly changing hardness and thus to make it difficult for discomfort to be caused when an occupant sits against the backrest.

In addition, while the foam cells 21 that are long in the seating surface direction YZ are easily compressed and deformed in the front-rear direction X, they are difficult to suffer shear deformation in the seating surface direction YZ in the above-described deformed state; thus the seating surface 12a side can be difficult to deform in the seating surface direction YZ, and shaking of the occupant in the seating surface direction YZ can be reliably mitigated.

In addition, since the aspect ratio of the foam cells 21C included in the rear end part C of the backrest 12 is 0.95 to 1.05, which are values close to 1, the foam cells 21C are difficult to deform by a force exerted in any direction, shaking can be reduced more, the foam cells 21C can be prevented from being crushed in the front-rear direction X, and it is possible to more reliably help the occupant not to feel hardness, which is a so-called feeling of bottom touch, at the time of sitting.

In addition, since the aspect ratio of the foam cells 21A included in the front end part A of the backrest 12 is 1.4 to 1.5, it is possible to prevent an excessively large amount of sinking into the backrest 12 in the front-rear direction X, without causing the occupant to feel the hardness at the time of sitting.

In addition, since the hardness of the upper part 14 in the front-rear direction X is 1.5 times or more the hardness of the lower part 13 in the front-rear direction X, steering stability can be reliably enhanced.

In addition, since the hardness of the upper part 14 in the front-rear direction X is 0.4 kPa or greater and 0.9 kPa or smaller and the hardness of the lower part 13 in the front-rear direction X is 0.2 kPa or greater and 0.4 kPa or smaller, the seat pad 1 exhibiting the above-described effects can be easily and reliably formed.

### (Examples)

A backrest 12 having a size in the front-rear direction X of about 45 mm was produced by injecting a urethane formulation stock solution prepared by mixing a polyol component formulation solution as shown in Table 1 with an isocyanate component into a cavity C1 of a mold 3 and performing foaming and molding, and the above-described aspect ratio and hardness were measured. Here, Table 1 shows the formulation of Example and Comparative example.

**[Table 1]**

| Details | | | Example | Comparative example |
|---|---|---|---|---|
| Polyol | Polyether polyol (A1-1) | | 100 | - |
| | Polyether polyol (A1-2) | | - | 45 |
| | Polymer polyol (A2-1) | | - | 45 |
| Crosslinking agent (C-1) | | | - | 6.5 |
| Crosslinking agent (C-2) | | | 1 | 3.5 |
| Crosslinking agent (C-3) | | | 1 | - |
| Catalyst (D-1) | | | 0.9 | - |
| Catalyst (D-2) | | | - | 0.4 |
| Catalyst (D-3) | | | - | 0.2 |
| Catalyst (D-4) | | | - | 0.3 |
| Foam stabilizer (E-1) | | | 0.4 | - |
| Foam stabilizer (E-2) | | | - | 1 |
| Foaming agent (F-1) | | | 3.3 | 2.4 |
| Total (unit: parts by mass) | | | 106.6 | 104.3 |
| Isocyanate index | | Polyisocyanate (B-1) | 84 | - |
| | | Polyisocyanate (B-2) | - | 86 |

Prior to measurement, a plurality of evaluation samples were collected from the backrest 12.

Specifically, three evaluation samples in a cube shape having sizes of 13 mm long × 13 mm wide × 13 mm high were collected from the upper part 14 of the backrest 12 having a size of 45 mm in the front-rear direction X at different positions in the front-rear direction X.

Further, the three evaluation samples when the seating surface 12a is expressed by 0% in terms of a front-rear direction position and the back surface 12b is expressed by 100% in terms of a front-rear direction position in the backrest 12 were separately collected at 14.8%, 44.3%, and 73.9% of front-rear direction positions in the backrest 12 respectively.

First, a method for measuring an aspect ratio will be described.

Photos of the center parts of the evaluation samples were acquired by enlarging them with an optical microscope, and a plurality of horizontal lines that equally divide the photos in the seating surface direction YZ at intervals of 2 mm in the vertical direction Z and a plurality of vertical lines that equally divide the photos at intervals of 2 mm in the front-rear direction X are specified. At this time, one of the plurality of horizontal lines and one of the plurality of vertical lines were set to penetrate the centers of the photos. The vertical line and the horizontal line penetrating the centers of the photos will be referred to as a vertical reference line and a horizontal reference line respectively.

Then, with respect to the vertical reference line and each of a pair of vertical lines interposing the vertical reference line therebetween in the front-rear direction X, the number of intersections with skeletons that define foam cells were visually counted at a distance 5 mm above and below the horizontal reference line. The average of the number of intersections counted on each of the vertical lines was calculated, and the average was assumed to be a size Ryz of the foam cells 21 in the seating surface direction YZ (the vertical direction Z).

In addition, similarly for the front-rear direction X, with respect to the horizontal reference line and each of a pair of horizontal lines interposing the horizontal reference line in the vertical direction Z, the number of intersections with the skeletons was visually counted at a distance 3 mm to the left and right from the vertical reference line. The average of the number of intersections counted on each of the horizontal lines was calculated, and the average was assumed to be a size Rx of the foam cells 21 in the front-rear direction X.

The aspect ratio was specified by dividing the Ryz value obtained as described above by the Rx value.

An example of a result of the aspect ratio of many foam cells 21 included in the backrest 12 based on the measurement method is illustrated in Fig. 7.

The results of Example were 1.44, 1.25, and 1.05 from the seating surface 12a side to the back surface 12b side, and the results of Comparative example were 1.17, 1.13, and 1.10 from the seating surface side to the back surface side.

As illustrated in Fig. 7, Example shows a tendency for the aspect ratio to decrease sharply from the seating surface 12a side to the back surface 12b in the front-rear direction X in comparison to Comparative example.

Next, a method of measuring hardness will be described.

With respect to each of the three evaluation samples, a pressure plate was moved forward to the evaluation samples until a reaction force received by the pressure plate became 0.1 N, and that position was set as an initial position of the pressure plate at which a thickness of the evaluation samples is 100%. A circular plate having a diameter of 200 mm was set to the pressure plate, and through-holes having a diameter of 6 mm were formed on a receiving plate on which the evaluation samples were placed at pitches of 19 mm.

Next, the pressure plate was moved forward to the evaluation samples at a speed of 50 mm/min, and when a thickness of the evaluation samples became 25%, the pressure plate was caused to return to the initial position at a speed of 50 mm/min. Then, after waiting for 60 seconds, the pressure plate was moved forward to the evaluation samples at a speed of 50 mm/min again, and when a thickness of the evaluation samples became 25%, the pressure plate was caused to return to the initial position at a speed of 50 mm/min.

In the above process, when the evaluation samples were compressed and deformed by 25% (when a thickness thereof was 75%), the value of stress applied to the evaluation samples was specified and the value was set as hardness.

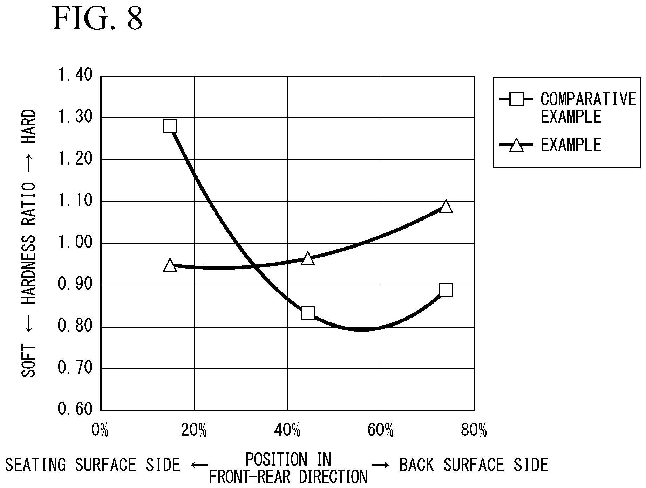

Then, the average of the hardness of the three evaluation samples was calculated, and a hardness ratio of each evaluation sample with respect to the average was calculated. That is, the hardness ratio means a ratio of hardness of each evaluation sample with respect to average hardness of the backrest 12 in the front-rear direction X. The graph of the results in which the horizontal axis represents a position in the front-rear direction X and the vertical axis represents hardness ratio is shown in Fig. 8.

The hardness ratios of Example were 0.95, 0.96, and 1.09 from the seating surface 12a side to the back surface 12b side, and the hardness ratios of Comparative example were 1.28, 0.83, and 0.89 from the seating surface side to the back surface side.

As shown in the graph of Fig. 8, the hardness of Example in the front-rear direction X continuously increased from the seating surface 12a side to the back surface 12b side. That is, the hardness distribution with respect to the front-rear direction X showed a continuous increase trend. As a result, a feeling of shaking obtained in the seat pad 1 can be sufficiently reduced. In addition, since the hardness ratio of the seating surface 12a side was relatively small, a repulsive force at the time of sitting was moderate, and since a feeling of pressure from the seating surface 12a was small, satisfactory seating comfort different than before was obtained.

Since the backrest 12 of Example showed the above-described hardness distribution, any one or more facts that a large amount of glycerol functioning as a crosslinking agent was included in the foaming stock solution of the flexible polyurethane foam, that an EO-based crosslinking agent served as the main crosslinking agent with no substantial PO-based crosslinking agent included, that the main catalyst was a resinification catalyst, and that no substantial foam stabilizer was included can be considered.

On the other hand, in Comparative example, the hardness ratio of the evaluation sample at the position of 31.6% in the front-rear direction immediately after the evaluation sample at the position of 10.5% in the front-rear direction close to the seating surface was lower than the hardness ratio of the latter evaluation sample as is obvious from the graph of Fig. 8. In this hardness distribution, when a centrifugal acceleration G or the like was added in the seating surface direction YZ, for example, a feeling that the flexible polyurethane foam slips aside may be felt in the middle part on the rear side than the front end part close to the seating surface, and thus the feeling of shaking was easily caused.

Since Comparative example shows the above-described hardness distribution, any one or more facts that no glycerin functioning as a crosslinking agent was included in the foaming stock solution of the flexible polyurethane foam, that a large amount of PO-based crosslinking agent was included as a crosslinking agent, and that a large amount of foaming catalyst was included as a catalyst can be considered.

Further, details of each material indicated by the model number or name in Table 1 shown above are as follows.

"Polyether polyol A1-1" has an EO/PO molar ratio of 16/84, a weight-average molecular weight of 7,000, and four functional groups.

"Polyether polyol A1-2" has an EO/PO molar ratio of 13/87, a weight-average molecular weight of 7,000, and three functional groups.

"Polymer polyol A2-1" has a solid content of 33%, a hydroxyl value of 23 mgKOH/g, a weight-average molecular weight of 5,400, and 3.2 functional polymer polyol (product name: KC855 by Sanyo Chemical Industries, Ltd.).

"Crosslinking agent C-1" has an EO/PO molar ratio of 0/100, a weight-average molecular weight of 700, and three functional groups.

"Crosslinking agent C-2" has an EO/PO molar ratio of 100/0, a weight-average molecular weight of 400, and four functional groups.

"Crosslinking agent C-3" is glycerin.

"Catalyst D-1" is a commercially available resinification catalyst, which is 1,1'-(3-(dimethylamino) propyl) imino) bis (2-propanol).

"Catalyst D-2" is a commercially available resinification catalyst, which is triethylenediamine.

"Catalyst D-3" is a commercially available foaming catalyst, which is (2-dimethylaminoethyl) ether.

"Catalyst D-4" is a commercially available diethanolamine, which catalyzes both resinification and foaming.

"Foam stabilizer E-1" is a low activity silicon-based foam stabilizer manufactured by Evonik Industries AG (product name: B8734).

"Foam stabilizer E-2" is a high activity silicon-based foam stabilizer manufactured by Evonik Industries AG (product name: B8742).

"Foaming agent F-1" is water.

"Polyisocyanate (B-1)" is an MDI-based isocyanate which is called "Foam Light 1302B" manufactured by BASF INOAC Polyurethanes Ltd. No substantial TDI-based isocyanate is included.

"Polyisocyanate (B-2)" is commercially available polyisocyanate which is a TDI-based isocyanate mixed at a ratio of TDI/MDI = 80/20 (mass ratio).

Next, a plurality of backrests having different hardness at at least one of the upper part and the lower part in the front-rear direction were manufactured, and measurement of hardness of each of the upper part and the lower part and evaluation of steering stability were performed. Further, a size of the backrests in the front-rear direction was set to about 45 mm as above.

The measurement of hardness was performed using three evaluation samples collected as described in paragraph [0088] in the similar method described in paragraph [0093]. Further, the averages of the three evaluation samples were set as hardness described in Table 2.

Further, Examples (the hardness ratios measured in Table 2) show data measured having the position at which the central region is equally divided into two in the vertical direction as a boundary.

Steering operability was evaluated by measuring the angle of rotation of the shoulder of the evaluator and the angle of rotation of the torso (the height position of the navel) when a lateral force (centrifugal acceleration G) was applied to the evaluator putting his or her back on the backrest and setting the difference between the rotation angle of the shoulder and the rotation angle of the torso as a twist angle.

The results are shown in Table 2.

**[Table 2]**

| | | Comparative example 1 | Comparative example 2 | Comparative example 3 | Comparative example 4 | Example 1 | Example 2 | Example 3 |
|---|---|---|---|---|---|---|---|---|
| Hardness | Upper part | 0.58 | 0.32 | 0.89 | 0.32 | 0.63 | 0.7 | 0.89 |
| | Lower part | 0.58 | 0.32 | 0.89 | 0.89 | 0.32 | 0.3 | 0.58 |
| Hardness ratio | | 1 | 1 | 1 | 0.36 | 1.97 | 2.33 | 1.53 |
| (Upper part/ Lower part) | | | | | | | | |
| Steering stability | | × | × | ×× | ×× | ○ | ○ | ○ |

In Table 2, steering stability is indicated by ○ when the twist angle is small, by ×× when the twist angle is large, and by × when the twist angle is medium. ○ is assumed to be pass and × and ×× are assumed to be fail.

As a result, it was ascertained that the backrests of Examples 1 and 2 in which the hardness of the lower part in the front-rear direction supporting at least the waist of the occupant was lower than the hardness of the upper part in the front-rear direction supporting at least the shoulder of the occupant had a small twist angle and excellent steering stability. On the other hand, it was ascertained that those of Comparative examples 1 to 4 in which the hardness of the lower part in the front-rear direction was equal to or greater than the hardness of the upper part in the front-rear direction had a large twist angle.

Further, the technical scope of the present invention is not limited to the above-described embodiments, and can be variously modified in the scope not departing from the gist of the present invention.

For example, although the seat pad 1 of the present embodiment includes the side auxiliary parts 16, the invention can be applied to, for example, a back seat that does not have the side auxiliary parts 16.

In addition, a position of the boundary 15 between the lower part 13 and the upper part 14 in the vertical direction Z is not limited to the embodiments and may be appropriately changed. In addition, the slit 18 may not be formed on the boundary 15.

In addition, an aspect ratio of the foam cells 21 is not limited to the embodiments, and may be appropriately changed to be, for example, uniform across the front-rear direction X.

In addition, the constituent components of the above-described embodiments can be appropriately replaced with known constituent components within the scope not departing from the gist of the present invention.

Since the hardness of the lower part of the backrest is lower than the hardness of the upper part in the present embodiment, by sinking the waist of the occupant deeply into the backrest, a position of the waist of the occupant with respect to the seat pad can be stabilized, wobbling or shaking of the upper body of the occupant can be mitigated in combination with the upper part with high hardness supporting the shoulders of the occupant even when a centrifugal force acts on the car body. Accordingly, in a case in which the occupant is the driver, for example, it is possible to prevent the line of sight of the driver from being shifted during driving, and thus steering stability can be enhanced.

Here, the upper part and the lower part are connected in the vertical direction, and the boundary between the upper part and the lower part may be positioned in the central region when the backrest is divided into three equal regions including the upper region, the lower region, and the central region positioned between the regions.

In this case, since the boundary between the upper part and the lower part is positioned in the central region of the backrest, wobbling or shaking of the upper body of the occupant can be reliably mitigated.

In addition, the pair of side auxiliary parts projecting forward from both sides of the backrest in the left-right direction are provided, the side auxiliary parts are provided integrally at least with the lower region and the central region of both sides of the backrest in the left-right direction, the front edges of the side auxiliary parts are formed in a curved shape gradually projecting forward as they face the inner side from the outer side in the vertical direction, and the boundary may be positioned above the top parts positioned most forward on the front edges of the side auxiliary parts and below the upper edges of the side auxiliary parts.

In this case, since the boundary between the upper part and the lower part is positioned above the top parts of the side auxiliary parts and below the upper edges of the side auxiliary parts, the part of the occupant at least including the waist that sinks deeply into the backrest can be supported not only by the backrest but also by the side auxiliary parts in the left-right direction, and thus wobbling or shaking of the upper body of the occupant can be more reliably mitigated.

In addition, with respect to many foam cells included in the backrest, a ratio of the size in the direction along the seating surface of the backrest to the size of in the front-rear direction may be higher as they are positioned closer to the seating surface side in the front-rear direction.

In this case, since a shape of the many foam cells included in backrest becomes longer in the direction along the seating surface (which will be referred to as a seating surface direction below) as they are positioned closer to the seating surface side in the front-rear direction, while foam cells that are easily compressed and deformed in the front-rear direction are positioned on the seating surface side, foam cells that are hardly compressed and deformed in the front-rear direction are positioned on the back surface side opposite to the seating surface side in the front-rear direction.

Therefore, the hardness of the seating surface side can be set to be lower than the hardness of the back surface side, thus it is possible to make it difficult for the occupant to feel hardness when being seated, and thus a good feeling of seating can be maintained.

Moreover, by gradually changing the ratio in the front-rear direction, it is possible to prevent a location with suddenly changed hardness from being generated at a position of the backrest between the seating surface side and the back surface side, and thus it is possible to make it difficult for discomfort to be caused when the occupant sits against the backrest.

In addition, while foam cells that are long in the seating surface direction are easily compressed and deformed in the front-rear direction, they are difficult to suffer shear deformation in the seating surface direction in the deformed state, and thus it becomes difficult to deform the seating surface side in the seating surface direction, and thus shaking of the occupant in the seating surface direction can be reliably mitigated.

In addition, the hardness of the upper part in the front-rear direction may be 1.5 times or more hardness of the lower part in the front-rear direction.

In this case, steering stability can be reliably enhanced.

Furthermore, the hardness of the upper part in the front-rear direction may be 0.4 kPa or higher and 0.9 kPa or lower, and the hardness of the lower part in the front-rear direction may be 0.2 kPa or higher and 0.4 kPa or lower.

In this case, a seat pad that exhibits the above-described effects can be easily and reliably formed.

### [Industrial Applicability]

According to the present invention, wobbling or shaking of the upper body of an occupant can be mitigated even when a centrifugal force acts on the car body.

### [Reference Signs List]

1 Seat pad
11 Seat
12 Backrest
12a Seating surface
12b Back surface
12x Upper region
12u Lower region
12z Central region
13 Lower part
14 Upper part
15 Boundary
16 Side auxiliary part
16a Front edge
16b Top part
16c Upper edge
21, 21A, 21B, 21C Foam cell
Rx Size of foam cell in front-rear direction
Ryz Size of foam cell in seating surface direction
X Front-rear direction
Y Left-right direction
YZ Seating surface direction
Z Vertical direction

## Claims

1. A seat pad, comprising:
a backrest that stands up from a rear side of a seat on which an occupant sits and supports the occupant from behind,
wherein the hardness of a lower part of the backrest in a front-rear direction that supports at least the waist of the occupant is lower than the hardness of an upper part of the backrest in the front-rear direction that supports at least the shoulders of the occupant.

2. The seat pad according to Claim 1, wherein the upper part and the lower part are connected in a vertical direction, and a boundary between the upper part and the lower part is positioned in a central region when the backrest is divided into three equal regions including an upper region, a lower region, and the central region positioned between the upper and lower regions.

3. The seat pad according to Claim 2, comprising:
a pair of side auxiliary parts that projects forward from both sides of the backrest in a left-right direction,
wherein the side auxiliary parts are provided integrally at least with the lower region and the central region of both sides of the backrest in the left-right direction,
wherein front edges of the side auxiliary parts are formed in a curved shape gradually projecting forward as the front edges go an inner side from an outer side in the vertical direction, and
wherein the boundary is positioned above top parts positioned furthest forward on the front edges of the side auxiliary parts and below upper edges of the side auxiliary parts.

4. The seat pad according to any one of Claims 1 to 3, wherein a ratio of a size of many foam cells included in the backrest in a direction along a seating surface of the backrest to a size of the foam cells in the front-rear direction becomes higher when the foam cells are positioned closer to the seating surface side in the front-rear direction.

5. The seat pad according to any one of Claims 1 to 4, wherein the hardness of the upper part in the front-rear direction is 1.5 times or more the hardness of the lower part in the front-rear direction.

6. The seat pad according to any one of Claims 1 to 5, wherein the hardness of the upper part in the front-rear direction is 0.4 kPa or higher and 0.9 kPa or lower, and the hardness of the lower part in the front-rear direction is 0.2 kPa or higher and 0.4 kPa or lower.
